# DEMANDE DE BREVET EUROPEEN

(11) **EP 1 798 832 A2**
(43) Date de publication de la demande: **20.06.2007**
(21) Numéro de dépôt: 06350014.4
(22) Date de dépôt: 15.12.2006
(51) Int. Cl.: H02G 5/06, H02B 1/20

(54) **Barre et jeu de barres pour des connexions électriques du type répartiteur**

(30) Priorité: 19.12.2005 FR 0512869
(71) Demandeur: Auxel, 59147 Gondecourt (FR)
(72) Inventeur: Pavy, Marc, 31590 Verfeil (FR); Maninchedda, Patrice, 62820 Libercourt (FR)
(74) Mandataire: Tournel, Jean Louis

(57) **Abrégé**

L'invention a pour objet une barre de connexion électrique comportant une branche principale et des branches secondaires caractérisée en ce que la branche (1A) principale est en aluminium et les branches (1B) secondaires en cuivre ou laiton avec chaque branche secondaire étant assemblée avec la branche principale par un élément (2) traversant, les zones (3) de contact entre la branche principale et les branches secondaires étant noyées dans un matériau isolant ces zones de l'atmosphère.

## Description

L'invention se rapporte à une barre de connexion électrique.

Elle se rapporte à un ensemble de barres de connexion.

Pour la distribution du courant par des lignes d'alimentations électriques, il est connu de placer entre l'arrivée générale de courant et chaque ligne de courant distribué, un dispositif de sécurité du type disjoncteur ou porte fusible.

Généralement depuis chaque dispositif de sécurité, un fil de phase et un fil de neutre sont connectés via un connecteur qui par exemple peut se présenter sous la forme d'une simple vis ou d'une cage à vis.

Ces dispositifs sont portés par un support et sont alignés suivant une rangée ou une colonne.

Chaque dispositif doit être alimenté par l'arrivée générale de courant et à cet effet, on alimente ces différents dispositifs de sécurité au moyen de peignes réalisés en un matériau conducteur.

Chaque peigne est lui même raccordé à une phase.

Le matériau généralement utilisé pour la fabrication de ces peignes est du cuivre ou du laiton.

Ce matériau présente des caractéristiques de résistivité intéressantes et il est largement employé.

Depuis quelques temps, le coût de ce matériau a fortement augmenté.

Il est connu d'utiliser de l'aluminium pour remplacer le cuivre mais cela exige de redimensionner les ensembles.

Il est connu, sur des barres en aluminium, de connecter des barres en cuivre cependant cela pose des problèmes en raison du phénomène de pile qui existe entre deux matériaux conducteurs de nature différente placés dans un milieu électrolytique.

Ce phénomène engendre de la corrosion favorisée par l'atmosphère ambiante plus ou moins humide.

Pour minimiser ce problème, il est connu de déposer sur la surface de l'aluminium un traitement de surface formant interface.

Cette opération reste coûteuse.

Il est connu d'assembler ces deux matériaux par frittage sous vide mais cela présente également des surcoûts non compatibles avec ce type de pièces que sont les peignes conducteurs.

Il a été également imaginé un assemblage par soudure mais outre la difficulté, l'énergie consommée augmente le prix.

L'invention se propose d'apporter une solution.

A cet effet, l'invention se rapporte à une barre de connexion électrique comportant une branche principale et des branches secondaires caractérisée en ce que la branche principale est en aluminium et les branches secondaires en cuivre ou laiton avec chaque branche secondaire étant assemblée avec la branche principale par un élément traversant, les zones de contact entre la branche principale et les branches secondaires étant noyées dans un matériau isolant ces zones de l'atmosphère.

Elle se rapporte également à un ensemble de barrettes.

L'invention sera bien comprise à l'aide de la description ci-après faite à titre d'exemple non limitatif en regard du dessin qui représente
FIG 1 : Vue en éclaté d'un exemple de barre avant mise en place du matériau isolant.
FIG 2 : Vue en gros plan d'un détail de la Figure 1
FIG 3 : Vue d'un distributeur à 3 barres.

En se reportant au dessin, on voit une barre 1 de connexion électrique.

Cette barre 1 ou peigne comprend une branche 1A principale (alimentation) et des branches 1B secondaires (sorties).

Sur la branche principale, on amène le courant et sur les branches secondaires, on distribue le courant.

Avantageusement, la branche 1A principale est en aluminium et les branches 1B secondaires en cuivre ou laiton, chaque branche secondaire étant assemblée avec la branche principale par un élément 2 traversant, les zones 3 de contact entre la branche principale et les branches secondaires étant noyées dans un matériau 10 isolant ces zones de l'atmosphère.

Ainsi les zones de contacts entre deux matériaux (cuivre ou laiton et aluminium) sont isolés de l'atmosphère et la corrosion est diminuée voire supprimée.

De préférence, le matériau isolant est de la résine isolante électriquement mais il pourrait s'agir d'un plastique.

De préférence, ce matériau isolant recouvre toute la branche principale. Ainsi outre la protection à la corrosion, elle sécurise la barrette.

L'élément 2 traversant est une vis. Elle s'engage dans un perçage 8 de la branche secondaire et vient se visser dans un taraudage 9 réalisé dans la branche principale.

Cet élément 2 traversant pourrait être une vis auto-taraudeuse ou un rivet.

On pourrait prévoir un assemblage par clinchage.

L'élément traversant sera de préférence en acier.

Avantageusement, la tête de la vis comporte des moyens en sorte que la résine coulée par dessus bloque sa rotation.

Par exemple, la tête de vis est du type hexagonal afin qu'une fois serrée et la résine coulée, le desserrage de la vis est empêché.

Une rondelle 4 métallique élastique complétera le moyen de fixation traversant.

Pour des raisons de hauteur de branche secondaire par rapport à la branche principale, une cale 5 peut se placer entre la branche principale et la branche secondaire.

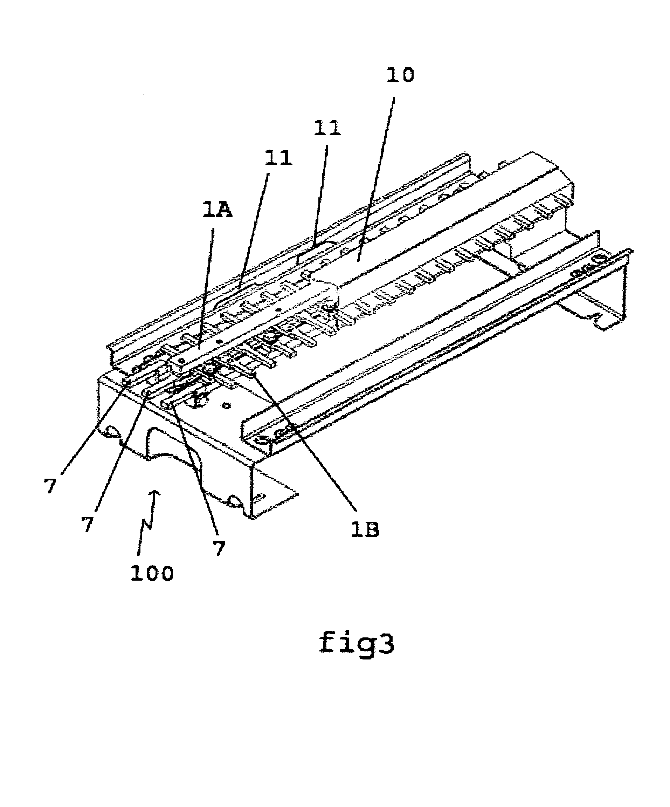

En figure 3, on a représenté un ensemble 100 comprenant trois barres de connexion.

Cet ensemble est donc constitué de trois branches principales , parallèles entre elles, chacune équipée de ses branches secondaires.

Les branches principales des barres dites extérieures sont dans un même plan et la troisième branche de la barre dite centrale se situe à un niveau au dessus des deux barres extérieures précitées.

Pour permettre de placer toutes les branches secondaires dans un même plan, une cale est placée entre la branche secondaire et la branche principale des barrettes dites extérieures.

Ces branches secondaires sont bien évidemment décalées suivant l'axe longitudinal afin de former des points 11 de connexion à trois contacts.

Les branches secondaires de ces viennent par dessus la branche principale.

La troisième branche principale, en position centrale, est montée à l'envers, c'est à dire que les branches secondaires de cette troisième barre sont disposées dessous.

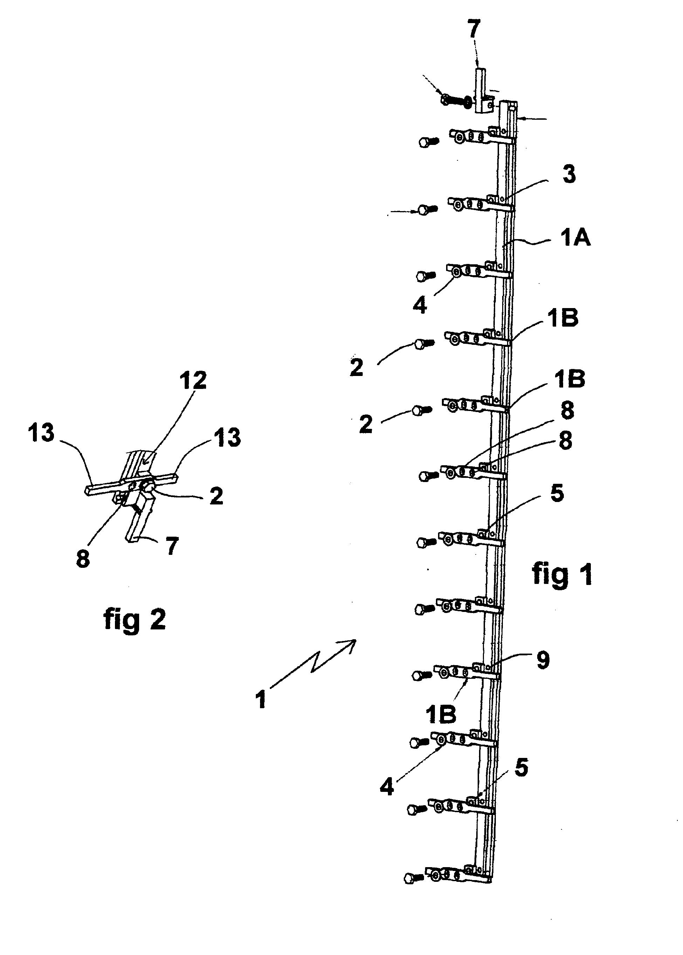

Pour l'alimentation de ces branches principales, on a prévu également des pattes 7 rapportées en extrémité des branches principales. Ces pattes sont soit fixées sur la même face que les branches secondaires (cas de la barre centrale figure 3) soit sur la face latérale (figure 1 ou 2). Ces pattes sont parallèles à l'axe longitudinal des branches principales.

Les branches secondaires de cette réalisation comprennent une zone 12 médiane et de chaque coté un doigt 13. Deux perçages 8 dans la zone médiane permettent de les décaler latéralement à droite ou à gauche par rapport à la branche principale. Cette zone médiane est plus large que les extrémités.

On a donc réalisé un ensemble de barres de protection moins coûteuses et sécurisées.

## Revendications

1. Barre de connexion électrique comportant une branche principale et des branches secondaires **caractérisée en ce que** la branche (1A) principale est en aluminium et les branches (1B) secondaires en cuivre ou laiton avec chaque branche secondaire étant assemblée avec la branche principale par un élément (2) traversant, les zones (3) de contact entre la branche principale et les branches secondaires étant noyées dans un matériau isolant ces zones de l'atmosphère.

2. Barre de connexion selon la revendication 1 **caractérisée en ce que** l'élément (2) traversant est une vis ou un rivet ou un clinchage.

3. Barre de connexion selon la revendication 2 **caractérisée en ce que** la tête de la vis comporte des moyens en sorte que la matière coulée par dessus bloque sa rotation.

4. Barre de connexion selon la revendication 2 **caractérisée en ce que** la vis s'engage dans un perçage de la branche secondaire et vient se visser dans un taraudage réalisé dans la branche principale.

5. Barre de connexion selon l'une quelconque des revendications 1 à 3 **caractérisée en ce que** l'élément traversant est en acier.

6. Barre de connexion selon la revendication 1 ou 2 ou 4 **caractérisée en ce qu'**une rondelle (4) métallique élastique complète le moyen de fixation traversant.

7. Barre de connexion selon la revendication 2 **caractérisée en ce qu'**il comprend une cale placée entre la branche secondaire et la branche principale.

8. Barre de connexion selon la revendication 1 **caractérisée en ce que** les branches secondaires comprennent une zone médiane et de chaque coté un doigt.

9. Barre de connexion selon la revendication 8 **caractérisé en ce que** la zone médiane est pourvue de deux orifices en vue de décaler les branches secondaires à droite ou à gauche.

10. Ensemble de barres de connexion selon l'une quelconque des revendications 1 à 8 **caractérisé en ce qu'**il est constitué par trois barres les dites barres étant disposées parallèlement .

11. Ensemble de barres selon la revendication 10 **caractérisé en ce que** les branches secondaires des barres sont toutes dans un même plan tandis que les branches principales sont réparties dans deux plans.

12. Ensemble de barres de connexion selon la revendications 11 **caractérisé en ce que** les branches principales des barres dites extérieures sont dans un même plan et la troisième branche principale de la barre dite centrale se situe à un niveau au dessus des deux barres extérieures précitées, les branches secondaires étant toutes dans le même plan.
